Europäisches Patentamt

European Patent Office

Office européen des brevets

(11) Veröffentlichungsnummer : **0 025 198**
**B1**

## (12) EUROPÄISCHE PATENTSCHRIFT

(45) Veröffentlichungstag der Patentschrift :
**11.05.83**

(21) Anmeldenummer : **80105155.8**

(22) Anmeldetag : **29.08.80**

(51) Int. Cl.³ : **F 16 H   5/04, G 05 G   9/18**

(54) Schaltvorrichtung für Zahnräderwechselgetriebe in Gruppenbauart für Kraftfahrzeuge.

(30) Priorität : **10.09.79 DE 2936527**

(43) Veröffentlichungstag der Anmeldung :
**18.03.81 Patentblatt 81/11**

(45) Bekanntmachung des Hinweises auf die Patenterteilung : **11.05.83 Patentblatt 83/19**

(84) Benannte Vertragsstaaten :
**FR GB IT**

(56) Entgegenhaltungen :
**CH A 468 893**
**DE A 2 128 172**
**DE C 287 849**
**FR A 1 333 227**
**FR A 1 546 483**
**FR A 2 414 156**
**GB A 8 327**
**US A 1 787 968**
**US A 2 922 315**
**US A 3 264 893**
**US A 3 364 779**

(73) Patentinhaber : **INTERNATIONAL HARVESTER COMPANY**
**401 North Michigan Avenue**
**Chicago Illinois 60611 (US)**

(72) Erfinder : **Schulze-Struchtrup, Karl-Dieter**
**Oefte 14**
**D-4307 Kettwig (DE)**
Erfinder : **Schmittbetz, Klaus**
**Martinusstrasse 53**
**D-5000 Köln 71 (DE)**

(74) Vertreter : **Zoepke, Carl O.**
**Erhardtstrasse 8**
**D-8000 München 5 (DE)**

Schaltvorrichtung für Zahnräderwechselgetriebe in Gruppenbauart für Kraftfahrzeuge

Die Erfindung bezieht sich auf eine Schaltvorrichtung für Zahnräderwechselgetriebe in Gruppenbauart für Kraftfahrzeuge, insbesondere für Ackerschlepper, mit einem Gruppenschaltgetriebe und einem mindestens zwei Gänge aufweisenden Gangschaltgetriebe, sowie einem gemeinsamen Schaltknüppel, dessen Bewegungen auf eine in einem Lagergehäuse axial verschiebbar sowie drehbar gelagerte Schaltwelle übertragbar sind, auf der eine in Drehrichtung der Schaltwelle lose und in Axialrichtung fest angeordnete Schalthülse sitzt, welche bei Überschreiten einer bestimmten Axialbewegung der Schaltwelle einen zum Gruppenschaltgetriebe gehörenden Schalthebel betätigt, und auf der zwei mit axialem Abstand zueinander drehfest mit der Schaltwelle verbundene Kupplungselemente zur wechselweisen Betätigung von zwei zum Gangschaltgetriebe gehörenden Schalthebeln durch axiales Verschieben und Verdrehen der Schaltwelle angeordnet sind.

Eine Schaltvorrichtung, die derartige konstruktive Merkmale aufweist, ist aus der DE-A-21 28 172 bekannt. Hierin lassen sich bei einer Schaltvorrichtung für ein Zahnräderwechselgetriebe ein Gruppengetriebe und ein Wendegetriebe mittels eines einzigen gemeinsamen Handschalthebels betätigen. Die Schalthülse zur Betätigung des zum Gruppenschaltgetriebe gehörenden Schalthebels weist auf ganzer axialer Länge eine Schrägnut auf, in die das eine Ende des schwenkbar gelagerten Schalthebels für das Gruppenschaltgetriebe eingreift, der somit bei Axialbewegung der Schaltwelle aus einer Neutral-Stellung heraus kontinuierlich in Richtung der einen oder anderen Getriebeeinheit des Gruppenschaltgetriebes verstellt wird. Nur in der Neutral-Stellung läßt sich durch Verdrehen der Schaltwelle ein zum Wendegetriebe gehörender zusätzlicher Vorwärtsgang direkt zuschalten. Bei eingekuppeltem Gruppenschaltgetriebe kann nur zwischen Vorwärts- und Rückwärtsgang geschaltet werden.

Die bei der bekannten Schaltvorrichtung vorgesehene Schrägnut hat im übrigen den Nachteil, daß es infolge Klemmkräften häufig zu Schaltschwierigkeiten kommt.

Eine andere Schaltvorrichtung geht aus der DE-A 14 80 723 als bekannt hervor. Dort ist das Zahnräderwechselgetriebe als Hauptgetriebe aus einer Eingangsgruppe, einer Ausgangsgruppe sowie einem Gruppenschaltgetriebe zusammengesetzt. Bei diesem Zahnräderwechselgetriebe sind zum Verstellen der Schaltglieder der Ausgangsgruppe des Hauptgetriebes und des Schaltgliedes des nachgeschalteten Gruppenschaltgetriebes von den Schaltbewegungen des Schaltknüppels gesteuerte Servomotoren vorgesehen. Die Schaltvorrichtung ist dabei so ausgebildet, daß zum Umschalten der Ausgangsgruppe des Hauptgetriebes bzw. des zugehörigen Servomotors der Schaltknüppel senkrecht zu den sich in Fahrtrichtung des Kraftfahrzeugs erstreckenden Schaltgassen und zum Umschalten des Gruppengetriebes schräg nach oben in eine Mittellängsebene verschwenkt wird. Die Wähl- und Schaltbewegungen entsprechen dabei dem bekannten H-förmigen Schaltbild einer Kulissenschaltung, das in zwei übereinanderliegenden Ebenen je einmal durchfahren wird. Um diese Wähl- und Schaltbewegungen durchführen und auf das Gangschalt- und Gruppengetriebe übertragen zu können, sind umfangreiche und bauliche Aufwendungen notwendig. So ist der Schaltknüppel über eine zusätzliche Schaltstange mit der Schaltwelle verbunden, wobei an der Schaltstange über eine Abwinklung und eine zusätzliche Steuerstange eine ortsfeste Abstützung der Schaltstange notwendig ist. Zum Umschalten des Servoventils des Gruppengetriebes ist ferner am unteren Ende des Schaltknüppels eine Anlenkung für eine weitere Welle notwendig, die über eine Steuerstange mit dem Servoventil des Gruppengetriebes in Verbindung steht. Dabei ist es unbedingt notwendig, daß die Schaltwelle von dem Schaltknüppel seitlich versetzt angeordnet ist, um die erforderlichen Bewegungsübertragungen auf die Getriebeteile durchführen zu können.

Die bekannte Schaltvorrichtung ist mithin sehr kompliziert und aufwendig aufgebaut. Sie bedarf einer Vielzahl von Teilen, welche die Funktionstüchtigkeit beeinträchtigen und auch frühzeitig zum Verschleiß und damit Ausfall der Schaltvorrichtung führen. Als besonderer Nachteil ist anzusehen, daß die bekannte Schaltvorrichtung aufgrund ihres Aufbaues erheblich viel Raum beansprucht.

Der Gegenstand vorliegender Erfindung verwendet Kupplungselemente. Kupplungselemente in Gestalt von in diametral gegenüberliegende Ausnehmungen von Schalthebeln eingreifenden Schaltstiften sind an sich beispielsweise aus der DE-A 20 63 371 bekannt, jedoch ist dort nur ein Schaltstift in der Schaltwelle vorhanden, über den in üblicher Weise die einzelnen Schalthebel des Gangschaltgetriebes geschaltet werden. Eine Doppelausnutzung der Schalthebel zum Betätigen des Gangschaltgetriebes einerseits und zum Betätigen des Gruppenschaltgetriebes andererseits ist dort nicht vorgesehen.

Der Erfindung liegt nun die Aufgabe zugrunde, eine Schaltvorrichtung der eingangs genannten Art zu schaffen, die einfach in ihrem Aufbau ist, sowie kostensparend und raumsparend ausgebildet werden kann, was vor allen Dingen beim Einbau in einen Ackerschlepper besonders wichtig ist, da hier in der Regel wenig Platz zur Verfügung steht. Daüberhinaus soll die Vorrichtung leicht und verständlich zu bedienen sein und wenig Teile aufweisen, so daß mit einer langen Lebensdauer zu rechnen ist.

Diese Aufgabe wird erfindungsgemäß bei einer Schaltvorrichtung der eingangs genannten Gattung dadurch gelöst, daß die Schalthebel des Gangschaltgetriebes lose auf der Schaltwelle gelagert sind und im Bereich ihrer Lagerung diametral gegenüberliegende Ausnehmungen aufweisen, in die die als radial von der Schaltwelle vorstehende Schaltstifte ausgebildeten Kupplungselemente eingreifen, und daß die Schalthülse mit einem Schaltfinger versehen ist, dessen freies Ende mit einem Umschaltmechanismus zusammenwirkt.

Dabei übernimmt das eine Kupplungselement an der Schaltwelle die Kraftübertragung auf die Schalthebel des Gangschaltgetriebes, wohingegen das andere Kupplungselement die gleiche Funktion erst dann ausübt, nachdem das Gruppenschaltgetriebe umgeschaltet wurde. Damit ist eine Doppelausnutzung der Schalthebel auf besonders einfache Weise möglich.

Die Schaltvorrichtung zeichnet sich durch wenig Bauteile aus, die auf gedrängtem Raum untergebracht werden können, so daß man zu einer kompakten Schalteinrichtung kommt, die sich auf engstem Raum in ein Kraftfahrzeug einbauen läßt.

In zweckmäßiger Ausgestaltung der Erfindung weist der Umschaltmechanismus eine schwenkbar gelagerte Kulissenplatte mit einem Längsschlitz zur Aufnahme des freien Endes des Schaltfingers und eine Aufnahmebohrung für ein zapfenförmig gestaltetes Ende des Schalthebels des Gruppengetriebes auf. Dieser rein mechanische Umschaltmechanismus kann ohne weiteres durch eine Servounterstützung besser ausgenutzt werden. Im Prinzip ist auch eine Fremdkraftschaltung möglich, wobei dann der Schaltfinger, die Kulissenplatte und der Schalthebel des Gruppengetriebes durch eine Kontaktplatte und einen entsprechend angepaßten Schaltfinger ersetzt werden, der über die Kontaktplatte fährt und dabei die Umschaltung auslöst.

Zur gedrängten Bauweise der Schaltvorrichtung trägt bei, wenn die Kulissenplatte in einer unterhalb der Schaltwelle liegenden Ebene über ein Lagerauge eines Deckels des Lagergehäuses schwenkbar gelagert ist. Hierdurch wird auch die Montage und Demontage der Schaltvorrichtung erheblich vereinfacht.

Da die Arretierung von Gang- und Gruppenschaltgabeln im Getriebe vorgenommen wird, ist es ohne zusätzlichen Aufwand möglich, die Schalteinheit auch bei gegenüber dem Fahrzeugrumpf elastisch aufgehängtem Fahrerstand (bzw. Bodengruppe oder Kabine) zu verwenden.

Weitere vorteilhafte Ausgestaltungen der Erfindung ergeben sich aus den Merkmalen der Unteransprüche.

Der Gegenstand der Erfindung ist in der Zeichnung beispielsweise dargestellt.

Figur 1 zeigt eine Seitenansicht eines Fahrerstandes und eines Teils eines Ackerschleppers mit der erfindungsgemäßen Schaltvorrichtung,

Figur 2 zeigt eine Draufsicht auf die Schaltvorrichtung,

Figur 3 zeigt einen Längsschnitt durch die Schaltvorrichtung,

Figur 4 zeigt die zugehörige Draufsicht auf die Schaltvorrichtung,

Figur 5 zeigt eine Draufsicht auf eine Kulissenplatte der Schaltvorrichtung,

Figur 6 zeigt einen Schnitt entlang der Linie VI-VI der Fig. 5 und

Figuren 7-9 zeigen weitere Einzelheiten der Schaltvorrichtung.

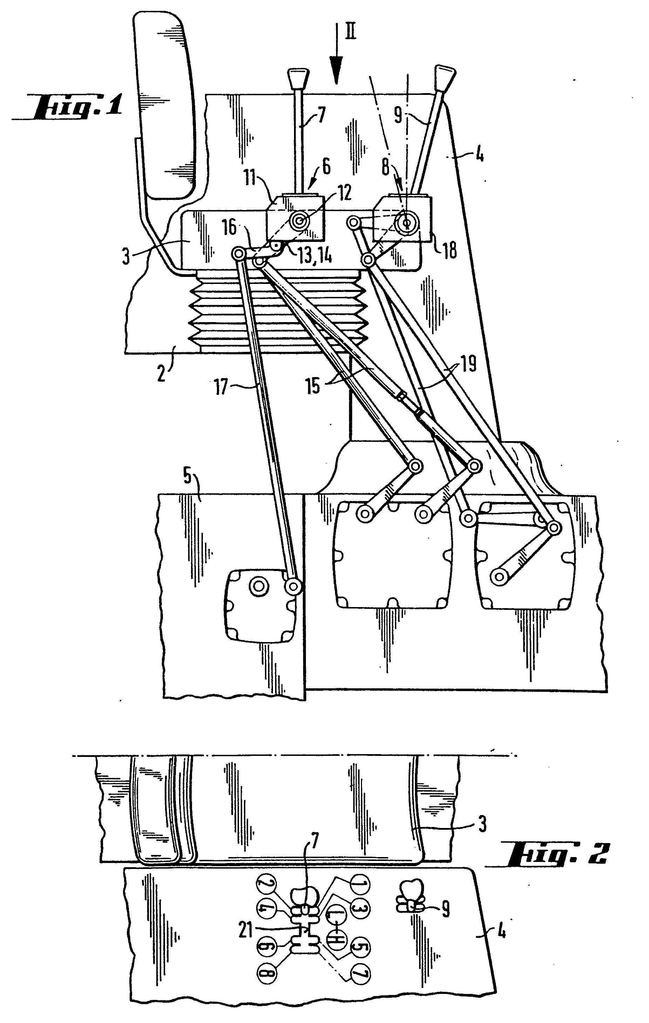

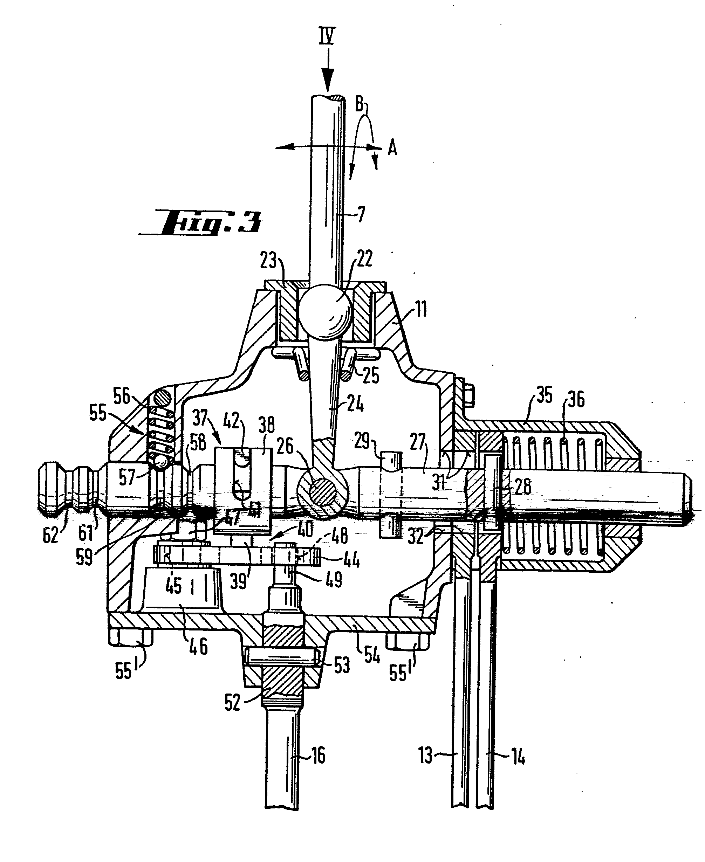

In Fig. 1 ist ein Fahrerstand eines Kraftfahrzeugs, beispielsweise eines Ackerschleppers dargestellt, von dem im wesentlichen nur eine Plattform 2, ein Fahrersitz 3 sowie eine Konsole 4 dargestellt sind. Unterhalb der Plattform 2 ist eine Antriebseinheit 5 dargestellt, zu der ein Zahnräderwechselgetriebe gehört, das im einzelnen nicht näher dargestellt ist. Zum Schalten des Zahnräderwechselgetriebes ist eine Schaltvorrichtung 6 vorgesehen, die einen Schaltknüppel 7 aufweist. Eine weitere Schaltvorrichtung 8 weist einen Schaltknüppel 9 auf. Der Schaltknüppel 7 ist ein kombinierter Schalthebel für ein Gruppengetriebe und ein Gangschaltgetriebe des Zahnräderwechselgetriebes. Der Schaltknüppel 7 ist in einem Lagergehäuse 11 an einer Schaltwelle 12 gelagert, auf der in weiter unten näher beschriebener Weise Schalthebel 13 und 14 lose gelagert sind, die über ein Betätigungsgestänge 15 das Gangschaltgetriebe umschalten. Am Lagergehäuse 11 ist ein weiterer Schalthebel 16 schwenkbar gelagert, über den mittels eines Betätigungsgestänges 17 das Gruppenschaltgetriebe geschaltet werden kann.

Dem Schaltknüppel 9 ist ein ähnliches Lagergehäuse 18 sowie ein Betätigungsgestänge 19 zugeordnet, über das eine Umschaltung von Vorwärts- und Rückwärtsfahrt vorgenommen werden kann, sowie ein Kriechgang oder eine Zwischengruppe geschaltet werden können. Da diese Schaltfunktionen nur ein « H » ausfüllen, kann die vierte Stellung entfallen oder sich darin z. B. die Vorwärtsstellung wiederholen, so daß bei Umschaltung von vorwärts auf rückwärts und Zwischengruppe auf vorwärts nur eine Längsbewegung ausgeführt wird.

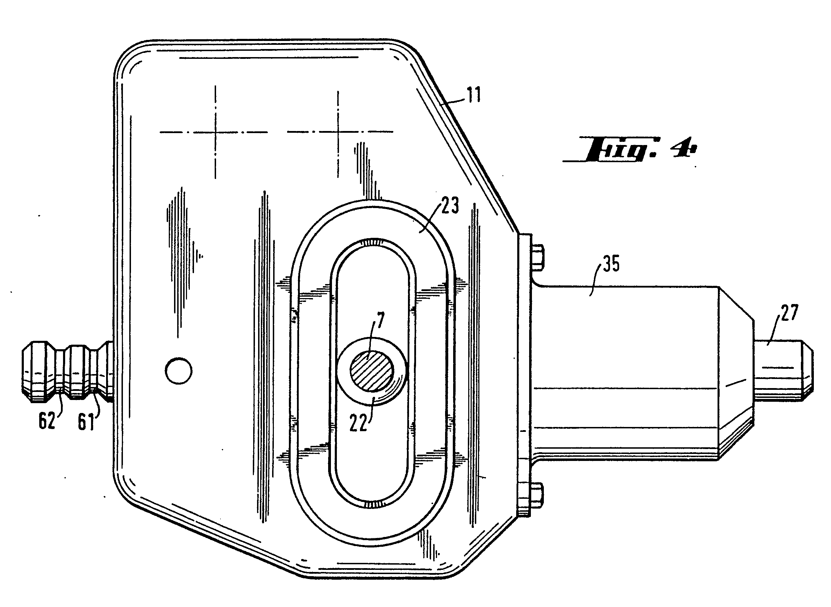

Wie die Draufsicht in Fig. 2 veranschaulicht, läßt sich der Schaltknüppel 9 in einer H-Kulisse und der Schaltknüppel 7 in einer Doppel-H-Kulisse verstellen, wobei in der einen Hälfte der Doppel-H-Kulisse die ersten vier Gänge und in der anderen Hälfte der Doppel-H-Kulisse die Gänge 5 bis 8 geschaltet werden können. In einer Wählgasse 21 läßt sich zwischen den Schaltgassen für den dritten bzw. vierten und dem fünften bzw. sechsten Gang eine Umschaltung von einer unteren auf eine obere Übersetzung im Gruppenschaltgetriebe durchführen, beispielsweise bei einem Ackerschlepper von einer Ackergruppe auf eine Straßengruppe.

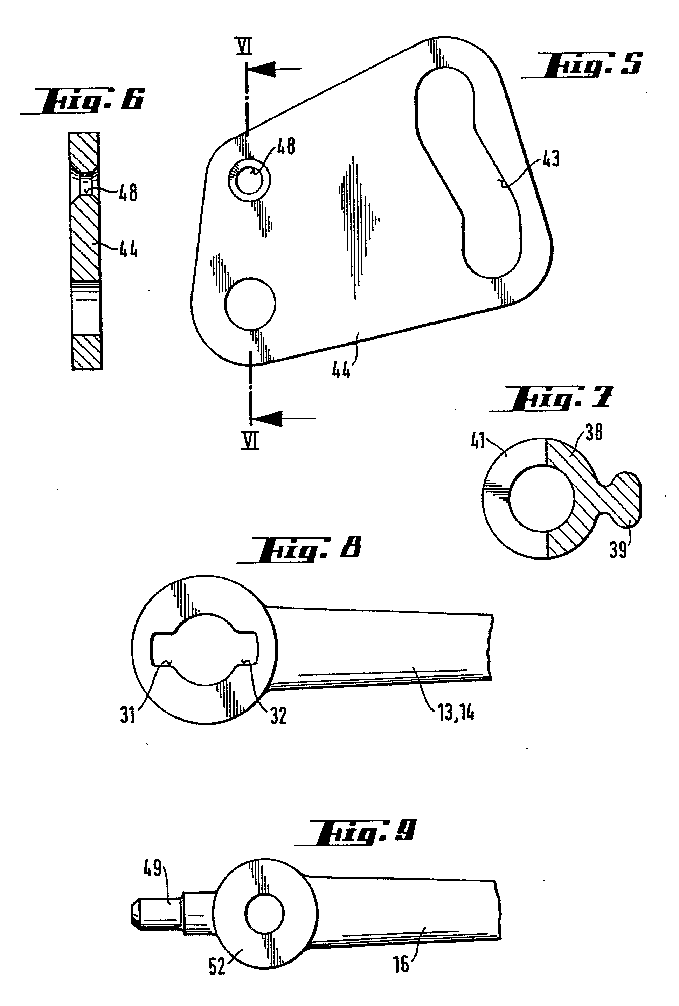

Wie aus Fig. 3 hervorgeht, ist der Schaltknüppel 7 über ein Kugelstück 22 in einer Führungskulisse 23 verstellbar, und zwar in Richtung des Doppelpfeiles A sowie quer dazu in Richtung des Doppelpfeiles B. Die Führungskulisse 23 sitzt im Lagergehäuse 11, wobei der Schaltknüppel 7 mit einem Fortsatz 24 an einer Kegelfeder 25 abgestützt ist, die den Schaltknüppel 7 normalerweise in einer Neutralstellung (Schaltrichtung Doppelpfeil B) hält. Am unteren Ende des Fortsatzes 24 ist der Schaltknüppel 7 über einen Stift 26 mit einer Schaltwelle 27 verbunden, wodurch diese sowohl in axialer Richtung als auch in einer Drehrichtung verstellt werden kann. Auf der Schaltwelle 27 sind zwei Kupplungselemente in Gestalt von mit axialem Abstand zueinander angeordneten Schaltstiften 28, 29 angeordnet. Diese Schaltstifte 28, 29 können in diametral gegenüberliegende Ausnehmungen 31, 32 der Schalthebel 13, 14 eingreifen und zwar derart, daß die Schaltstifte 28, 29 in axialer Richtung unbehindert durch die Schalthebel 13, 14 hindurchgeführt werden können und eine Funktion auf die Schalthebel nur dann ausüben, wenn die Schaltwelle 27 verdreht wird. Der Schalthebel 13 dient zum Schalten des ersten und zweiten sowie des fünften und sechsten Ganges, während der Schalthebel 14 zum Schalten des dritten, vierten sowie des siebten und achten Ganges dient. An dem Schalthebel 14 liegt innerhalb eines an das Lagergehäuse 11 angesetzten Flanschgehäuses 35 eine Druckfeder 36 an, die sich an dem Flanschgehäuse 35 abstützt und die Schaltwelle 27 umgibt.

Auf der den Schaltstiften 28, 29 gegenüberliegenden Seite ist auf der Schaltwelle 27 ein Schaltfinger 37 angeordnet, der aus einem auf der Schaltwelle 27 begrenzt drehbar gelagerten Hülsenteil 38 und einem Führungskopf 39 (Fig. 7) besteht. Wie Fig. 7 zeigt, besitzt der Schaltfinger 37 eine mittlere, sich über einen Teil des Umfangs des Hülsenteils 38 erstreckende Nut 41. Aus Fig. 3 ist ersichtlich, daß sich in diese Nut 41 ein in der Schaltwelle 27 sitzender Stift 42 erstreckt, so daß der Schaltfinger 37 begrenzt drehbar auf der Schaltwelle 27 sitzt, sich aber gegenüber dieser nicht in axialer Richtung verschieben läßt. Mit dem Führungskopf 39 greift der Schaltfinger 37 in einen etwa kurvenförmigen Längsschlitz 43 einer Kulissenplatte 44 ein, die im einzelnen in den Fig. 5 und 6 dargestellt ist. Die Kulissenplatte 44 ist über einen Zapfen 45 an einem Lagerauge 46 schwenkbar gelagert und mittels einer Mutter 47 gesichert. In der Kulissenplatte 44 befindet sich ferner eine Aufnahmebohrung 48 für ein zapfenförmiges Ende 49 des Schalthebels 16, der zum Betätigen des Gruppengetriebes dient. Wie Fig. 9 zeigt, besitzt der Schalthebel 16 ein Nabenstück 52, über das der Schalthebel 16 auf einer sich parallel zur Schaltwelle 27 erstreckenden Lagerachse 53 schwenkbar gelagert ist. Diese Lagerachse 53 ist in einem Deckel 54 untergebracht, der über Schrauben 55' mit dem Lagergehäuse 11 lösbar verbunden ist.

In der Schaltwelle 27 ist eine Arretiervorrichtung 55 vorgesehen, die im einzelnen aus einer Druckfeder 56, einer Rastkugel 57 sowie innerhalb der Schaltwelle 27 angebrachten Ringnuten 58, 59, 61 und 62 besteht. Dadurch läßt sich die Schaltwelle 27 entsprechend ihrer axialen Schaltstellungen in der jeweils eingestellten Schaltstellung fixieren, wobei durch eine im Durchmesser unterschiedliche Ausbildung der Stege zwischen den Ringnuten ein Gangwechsel innerhalb der 1, 2-3, 4 bzw. 5, 6-7, 8 -« H »-Kulisse leichter durchzuführen ist als der Gruppenwechsel.

Die Wirkungsweise der erfindungsgemäßen Vorrichtung ist wie folgt :

Der Schaltknüppel 7 befindet sich in der in Fig. 3 dargestellten Lage in seiner Neutralstellung. Der Schaltstift 28 befindet sich im Bereich des Schalthebels 14. Wird nun der Schaltknüppel 7 im Sinne des Doppelpfeils B in der einen oder anderen Richtung verdreht, so läßt sich im Gangschaltgetriebe der dritte oder vierte Gang einlegen. Soll der erste oder zweite Gang eingelegt werden, so ist der Schaltknüppel 7 aus der gezeichneten Lage heraus im Sinne des Doppelpfeiles A nach rechts zu bewegen, so daß dann die Schaltwelle 27 nach links verstellt wird, bis der Schaltstift 28 in die Ausnehmungen 31, 32 des anderen Schalthebels 13 gelangt. Hierbei wandert die Kugel 57 in die Ringnut 58. Durch entsprechendes Betätigen des Schaltknüppels 7 in den Schaltgassen, d. h. in Richtung des Doppelpfeiles B kann der erste oder zweite Gang des Gangschaltgetriebes eingelegt werden. Das Gruppenschaltgetriebe des Zahnräderwechselgetriebes befindet sich in der hohen oder niedrigen Gruppenschaltstellung. Soll nun das Gruppenschaltgetriebe umgeschaltet werden, so muß der Schaltknüppel 7 um eine bestimmte Wegstrecke in Richtung des Doppelpfeiles A verstellt werden, und zwar so weit, bis sich der andere Schaltstift 29 in den Ausnehmungen 31, 32 entweder des Schalthebels 13 oder 14 befindet. Entsprechend dieser Stellung kann dann der fünfte und sechste bzw. siebte und achte Gang des Zahnräderwechselgetriebes eingeschaltet werden, da gleichzeitig mit dieser axialen Verschiebung der Schaltwelle 27 über den Schaltfinger 37 auch die Kulissenplatte 44 verstellt wird, und zwar dergestalt, daß über das zapfenförmige Ende 49 der Schalthebel 16 des Gruppengetriebes über die Lagerachse 53 entsprechend verschwenkt wird und damit in die andere Gruppenschaltstellung gelangt.

In den jeweils eingestellten Schaltstellungen ist die Schaltwelle 27 und damit auch der Schaltknüppel 7 durch die Arretiervorrichtung 55 gesichert, so daß eine unbeabsichtigte Verstellung nicht möglich ist.

**Ansprüche**

1. Schaltvorrichtung für Zahnräderwechselgetriebe in Gruppenbauart für Kraftfahrzeuge, insbesondere Ackerschlepper, mit einem Gruppenschaltgetriebe und einem mindestens zwei Gänge aufweisenden Gangschaltgetriebe, sowie einem gemeinsamen Schaltknüppel (7), dessen Bewegungen auf eine in einem Lagergehäuse (11) axial verschiebbar sowie drehbar gelagerte Schaltwelle (27) übertragbar sind, auf der eine in Drehrichtung der Schaltwelle (27) lose und in Axialrichtung fest angeordnete Schalthülse (38) sitzt, welche bei Überschreiten einer bestimmten Axialbewegung der Schaltwelle einen zum Gruppenschaltgetriebe gehörenden Schalthebel (16) betätigt, und auf der zwei mit axialem Abstand zueinander drehfest mit der Schaltwelle verbundene Kupplungselemente (28, 29) zur wechselweisen Betätigung von zwei zum Gangschaltgetriebe gehörenden Schalthebeln (13, 14) durch axiales Verschieben und Verdrehen der Schaltwelle (27) angeordnet sind, dadurch gekennzeichnet, daß die Schalthebel (13, 14) des Gangschaltgetriebes lose auf der Schaltwelle (27) gelagert sind und im Bereich ihrer Lagerung diametral gegenüberliegende Ausnehmungen (31, 32) aufweisen, in die die als radial von der Schaltwelle (27) vorstehende Schaltstifte (28, 29) ausgebildeten Kupplungselemente eingreifen, und daß die Schalthülse (38) mit einem Schaltfinger (37) versehen ist, dessen freies Ende (39) mit einem Umschaltmechanismus (40) zusammenwirkt.

2. Schaltvorrichtung nach Anspruch 1, dadurch gekennzeichnet, daß der Umschaltmechanismus (40) eine schwenkbar gelagerte Kulissenplatte (44) mit einem Längsschlitz (43) zur Aufnahme des freien Endes (39) des Schaltfingers (37) und eine Aufnahmebohrung (48) für ein zapfenförmig gestaltetes Ende (49) des Schalthebels (16) des Gruppengetriebes aufweist.

3. Schaltvorrichtung nach Anspruch 2, dadurch gekennzeichnet, daß die Kulissenplatte (44) in einer unterhalb der Schaltwelle (27) liegenden Ebene über ein Lagerauge (46) an einem Deckel (54) des Lagergehäuses (11) schwenkbar gelagert ist.

4. Schaltvorrichtung nach einem der Ansprüche 2 und 3, dadurch gekennzeichnet, daß das zapfenförmige Ende (49) des Gruppengetriebe-Schalthebels (16) von unten her in die Aufnahmebohrung (48) der Kulissenplatte (44) eingreift.

5. Schaltvorrichtung nach den Ansprüchen 2 und 3, dadurch gekennzeichnet, daß der Gruppengetriebe-Schalthebel (16) mit einem Nabenstück (52) auf einer sich parallel zur Schaltwelle (27) erstreckenden Lagerachse (53) in dem abnehmbaren Deckel (54) des Lagergehäuses (11) schwenkbar gelagert ist.

6. Schaltvorrichtung nach Anspruch 2, dadurch gekennzeichnet, daß der Schaltfinger (37) des Hülsenteils (38) mit seinem davon radial abstehenden Führungskopf (39) in den im wesentlichen Z-förmigen oder kurvenförmigen Längsschlitz (43) der Kulissenplatte (44) eingreift.

7. Schaltvorrichtung nach Anspruch 6, dadurch gekennzeichnet, daß im Hülsenteil (38) des Schaltfingers (37) eine sich über einen Teil des Umfangs erstreckende, radial gerichtete Nut (41) und an der Schaltwelle (27) ein in die Nut (41) eingreifender Stift (42) vorhanden sind.

8. Schaltvorrichtung nach einem oder mehreren der Ansprüche 1 bis 7, dadurch gekennzeichnet, daß die Schaltwelle (27) mit einer sie in deren Schaltstellungen zentrierenden Arretiervorrichtung (55) versehen ist.

9. Schaltvorrichtung nach einem oder mehreren der Ansprüche 1 bis 8, gekennzeichnet durch eine die Schaltwelle (27) umgebende, in Axialrichtung auf die Schalthebel (13, 14) des Gangschaltgetriebes einwirkende Druckfeder (36), die sich an einem an das Lagergehäuse (11) angesetzten Flanschgehäuse (35) abstützt.

10. Schaltvorrichtung nach Anspruch 9, dadurch gekennzeichnet, daß die Druckfeder (36) von Tellerfedern gebildet ist.

**Claims**

1. Switching device for toothed gear-change boxes in group drive arrangement for motor vehicles, particularly farm tractors, comprising a range shift transmission unit, a gear-shift transmission unit with at least two numbers of gears and a common speed selector lever (7), the movements of said lever are transferable to a gear-shift-lever shaft (27) being axially shiftable and pivotally supported in a bearing housing (11), said gear-shift-lever shaft (27) carrying a sleeve member (38) axially fixed and rotationally movable on said gear-shift-lever shaft, said sleeve member actuating a gearshift lever (16), belonging to the range shift transmission unit, after exceeding a certain axial movement of the gear-shift-lever shaft, to which furthermore two axially spaced coupling elements (28, 29) are fixedly secured for reciprocal actuating one of two gear-shift levers (13, 14), belonging to the gear shift transmission unit, by axial shifting and twisting of the gear-shift-lever shaft (27), characterized in that the gear-shift levers (13, 14) of the gear-shift transmission unit are freely supported on the gear-shift-lever shaft (27) and are provided with recesses (31, 32) positioned diametrically opposite within the range of the support, coupling elements engageable in said recesses, said coupling elements are designed as tripping pins (28, 29) projecting radially from the gear-shift-lever shaft (27); and that the sleeve member (38) is provided with a shift finger (37), interacting with its free end (39) with a shifting mechanism (40).

2. Switching device according to claim 1, characterized in that the shifting mechanism (40) comprises a pivotally supported guide plate (44) having an elongated slot (43) to receive the free end (39) of the shift finger (37), and having a bore (48) to receive the pin-shaped end section (49) of the gear-shift lever (16) of the range shift transmission unit.

3. Switching device according to claim 2, characterized in that the guide plate (44) is pivoted in a plane below the gear-shift-lever shaft (27) in a bearing boss (46) provided at a bottom portion (54) of the bearing housing (11).

4. Switching device according to one of the claims 2 and 3, characterized in that the pin-shaped end section (49) of the gearshift lever (16) of the range shift transmission unit engages with the bore (48) in the guide plate (44) from the bottom towards the top.

5. Switching device according to claims 2 and 3, characterized in that the gearshift lever (16) of the range shift transmission unit is pivotally supported with its hub section (52) on an axle (53) extending parallel to the gear-shift-lever shaft (27) within the removable bottom portion (54) of the bearing housing (11).

6. Switching device according to claim 2, characterized in that the shift finger (37) of the sleeve member (38) engages with the generally Z-shaped or curved elongated slot (43) in the guide plate (44) via a guide head (39) projecting radially from said sleeve member (38).

7. Switching device according to claim 6, characterized in that the sleeve member (38) of the shift finger (37) is provided with a groove (41) extending radially and along a part of the circumference of the sleeve member, in said groove engaging a pin (42).

8. Switching device according to one or several of the claims 1 to 7, characterized in that the gear-shift-lever shaft (27) is provided with an arresting device (55) for locking said shaft in its shifting positions.

9. Switching device according to one or several of the claims 1 to 8, characterized by a pressure spring (36) encircling the gear-shift-lever shaft (27) and acting in axial direction of the gearshift levers (13, 14) of the gear shift transmission unit, said pressure spring supporting within a housing (35) flanged to the bearing housing (11).

10. Switching device according to claim 9, characterized in that the pressure spring (36) is arranged as cup springs.

**Revendications**

1. Dispositif de commande de boîte de vitesses à engrenages à positions groupées, pour des véhicules à moteur, tels que des tracteurs agricoles, comportant une boîte de commutation de groupe de vitesses, et une boîte de changement de vitesse ayant au moins deux positions, ainsi qu'un levier commun de manœuvre (7) dont les mouvements sont transmis à un arbre sélecteur (27) monté dans un carter, où cet arbre peut coulisser axialement et pivoter autour de son axe, une bague de commande (38), montée libre en rotation sur l'arbre sélecteur (27) sans pouvoir coulisser axialement sur cet arbre, et prévue pour actionner une biellette de commande (16) de la boîte de commutation de groupe lorsque le déplacement axial de l'arbre baladeur dépasse une certaine amplitude, l'arbre sélecteur (27) portant deux organes d'accouplement (28, 29) solidaires en rotation de l'arbre et écartés l'un de l'autre sur celui-ci dans le sens axial, pour actionner de manière sélective deux biellettes de commande (13, 14) de la boîte de changement de vitesse, sous l'effet d'un coulissement axial et d'un mouvement de rotation de l'arbre sélecteur (27), caractérisé en ce que les biellettes de commande (13, 14) ont chacune une tête enfilée librement sur l'arbre sélecteur (27), et présentent des échancrures diamétralement opposées (31, 32) à l'endroit de leur tête enfilée sur l'arbre, pour recevoir les organes d'accouplement de l'arbre, constitués par des doigts de commande (28, 29), en saillie radiale sur l'arbre sélecteur (27), et en ce que la bague de commande (38) est pourvue d'un doigt d'actionnement (37) dont l'extrémité libre (39) coopère avec un mécanisme de commutation (40).

2. Dispositif de commande selon la revendication 1, caractérisé en ce que le mécanisme de commutation (40) comporte une plaque de coulisse (44) oscillante, montée sur un pivot et présentant une fente longitudinale (43) pour recevoir l'extrémité libre (39) du doigt d'actionnement (37), et un perçage (48) pour recevoir un téton d'extrémité (49) de la biellette de commande (16) de la boîte de commutation de groupe.

3. Dispositif de commande selon la revendication 2, caractérisé en ce que la plaque de coulisse (44) est montée de manière oscillante sur un bossage (46) d'un couvercle (54) du carter (11), dans un plan situé au-dessous de l'arbre sélecteur (27).

4. Dispositif de commande selon l'une des revendications 2 et 3, caractérisé en ce que le téton d'extrémité (49) de la biellette de commande de la boîte de commutation de groupe est engagée par dessous dans le perçage (48) de la plaque de coulisse (44).

5. Dispositif de commande selon l'une des revendications 2 et 3, caractérisé en ce que la biellette de commande (16) de la boîte de commutation de groupe comporte une partie en forme de moyeu (52), montée de manière oscillante sur un axe (53) parallèle à l'arbre baladeur (27) et solidaire du couvercle amovible (54) du carter (11).

6. Dispositif de commande selon la revendication 2, caractérisé en ce que le doigt d'actionnement (37) de la bague (38) montée sur l'arbre sélecteur présente une tête (39) en saillie radiale engagée dans la fente longitudinale (43) de la plaque de coulisse (44), cette fente présentant un profil courbe sensiblement en forme de Z.

7. Dispositif de commande selon la revendication 6, caractérisé en ce que la bague (38) du doigt d'actionnement (37) présente une fente radiale (41), recouvrant une partie de la périphérie de la bague, et dans laquelle est engagé un téton (42) de l'arbre sélecteur (27).

8. Dispositif de commande selon l'une des revendications 1 à 7, caractérisé en ce que l'arbre sélecteur (27) est associé à un dispositif de blocage (55), prévu pour immobiliser l'arbre dans ses positions de commande.

9. Dispositif de commande selon l'une des revendications 1 à 8, caractérisé en ce qu'il comporte un ressort de poussée (36) monté autour de l'arbre sélecteur (27) pour exercer une poussée axiale sur les biellettes de commande (13, 14) de la boîte de changement de vitesses, en s'appuyant sur le fond d'un carter latéral (35) accolé au carter (11).

10. Dispositif de commande selon la revendication 9, caractérisé en ce que le ressort de poussée (36) est constitué par des coupelles élastiques.

**Fig. 1**

**Fig. 2**

Fig. 3

Fig. 4

*Fig. 6*

*Fig. 5*

*Fig. 7*

*Fig. 8*

*Fig. 9*